# EUROPÄISCHE PATENTSCHRIFT

(11) **EP 0 876 307 B1**
(45) Veröffentlichungstag und Bekanntmachung des Hinweises auf die Patenterteilung: **02.02.2000**
(21) Anmeldenummer: 96939246.3
(22) Anmeldetag: 15.11.1996
(51) Int. Cl.: C04B 7/42

(54) **VERFAHREN ZUM HERSTELLEN VON ZEMENT**
METHOD FOR PRODUCING CEMENT
PROCEDE DE PRODUCTION DE CIMENT

(43) Veröffentlichungstag der Anmeldung: 11.11.1998
(73) Patentinhaber: Holderchem Holding AG, 5113 Holderbank (CH)
(72) Erfinder: AKSTINAT, Manfred, CH-8050 Zürich (CH); SUTER, Willi, CH-5233 Stilli (CH)
(74) Vertreter: Haffner, Thomas M., Dr.
(86) Internationale Anmeldenummer: IB9601365
(87) Internationale Veröffentlichungsnummer: WO9822407

(56) Entgegenhaltungen:
- CH-A- 534 643
- DD-A- 153 816
- DD-A- 246 983
- DD-A- 262 711
- FR-A- 2 318 835
- DATABASE WPI Section Ch, Week 9704, Derwent Publications Ltd., London, GB; Class L02, AN 97-034800, XP002035337 & AT 9 500 998 A (HOLDERCHEM HOLDING AG) 15 November 1996 & AT 402 637 B

## Beschreibung

Die Erfindung bezieht sich auf ein Verfahren zum Herstellen von Zementen, bei welchem die Zementrohstoffe nach dem Trocken- oder Naßverfahren in einem Ofen gebrannt oder gesintert werden, wobei in den Ofen reduzierend wirkende Substanzen eingebracht werden.

Die Beheizung bzw. die Erzielung entsprechend hoher Brenntemperaturen der Öfen (in der Regel Drehrohröfen) kann mit Ölen, Gasen, festen Brennstoffen o.ä. erfolgen, wobei im allgemeinen mit Sauerstoffüberschuß gearbeitet wird, wodurch über die Ofenlänge eine weitestgehend oxidierende Ofenatmosphäre üblicherweise vorherrscht.

Die natürlichen Zement-Rohstoffe fallen mit unterschiedlicher Reinheit an. Je nach verwendeten Rohstoffen können neben Eisen auch eine Reihe anderer Schwermetalle in den Ausgangsmaterialien enthalten sein, wobei insbesondere das Vorhandensein von Metallen der III. bis VIII. Nebengruppen beim Sinterprozeß in oxidierender Atmosphäre verschiedene Probleme mit sich bringen kann.

So könnte beispielsweise Chrom sowohl in der drei- als auch in der sechswertigen Oxidationsstufe im Zementklinker vorliegen. Eine übermäßige Chrom-VI-Belastung des Endproduktes ist jedoch unerwünscht. Es wird daher angestrebt, daß unerwünschte Oxidationsstufen, insbesondere von Chrom, vermieden werden. Eine partiell reduzierende Ofenatmosphäre ist in der Regel nur bei spezieller Ofenführung und unvollständiger Verbrennung möglich.

Auch beim Einsatz kompliziert zusammengesetzter Brennstoffe (z.B. Klärschlämme, Altreifen etc.) können Fremdstoffe in unerwünschten Oxidationsstufen auftreten. Darüber hinaus ist es erwünscht, Zemente stets in einer durch Oxide gefärbten, stabilen Grundfarbstellung herzustellen.

Aus der DD 246 983 Al ist es bekannt geworden, reduzierend wirkende Substanzen in den Drehrohrofen einzubringen. Beispiele für derartige Substanzen werden nicht gegeben. Der Verwendung von Fe(II)-Sulfaten nach dem Brennen wird eine Abbindeverzögerung zugeschrieben.

In der DD 153 816 Al wurde vorgeschlagen, Ammoniumsalze ggf. gemeinsam mit Phosphorsäureestern als Lösung oder Emulsion in den Drehrohrofen einzudüsen.

Die FR 2318835 zeigt und beschreibt ein Verfahren zur Reduktion des Gehaltes an Stickoxiden der Abgase eines Drehrohrofens bei der Herstellung von Zement. Dabei wird in das Gasabzugsrohr des Drehrohrofens ein Reduktionsmittel und zwar Kohlenstoff, Kohlenwasserstoffe, CO, NH₃, Calciumoxid, Eisen oder Eisenoxid eingebracht.

Die Erfindung zielt nun darauf ab, ein Verfahren zur Herstellung von Zementen der eingangs genannten Art zu schaffen, mit welchem das Auftreten von unerwünschten Oxidationsstufen von Metallen (z.B. die Oxidation zu Chromaten) eingeschränkt bzw. verhindert werden kann, ohne daß hierbei die Wirtschaftlichkeit der Ofenführung beeinträchtigt wird. Insbesondere soll die Bildung toxischer organischer Substanzen und die Bildung von SO₂ oder anderen gasförmigen Schadstoffen vermieden werden. Gleichzeitig zielt das erfindungsgemäße Verfahren darauf ab, in einfacher Weise die Farbstellung des erzeugten Zementes während oder nach dem Sinterprozeß gezielt einzustellen, so daß unmittelbar auch anders farbige Zemente hergestellt werden können.

Zur Lösung dieser Aufgabe besteht das erfindungsgemäße Verfahren im wesentlichen darin, daß in den Ofen Metalloxid-, Metallhydroxid-, Metalloxidhydrat- und/oder Metallsole oder Metallphosphate, Metallsilikate oder deren Sole eingedüst oder eingesprüht werden.

Derartige Metalloxid-, Metallhydroxid-, Metalloxidhydrat- und/ oder Metallsole oder Metallverbindungen können unter Nutzung von Redox-Reaktionen in einer oxidierenden Ofenatmosphäre reduzierende Zonen ohne Beeinträchtigung der Ofenführung sicherstellen, wobei diese reduzierenden Zonen räumlich exakt definiert werden können. Es kann somit der Ofen in üblicher Weise und unter Nutzung der energetisch vorteilhaftesten Fahrweise betrieben werden, wobei lediglich in demjenigen Ofenbereich, in welchem eine Reduktion erzielt werden soll, auch eine entsprechende reduzierende Zone ausgebildet wird. Bei der Zugabe von Metallverbindungen bzw. von deren Solen kann die Analyse der Rohprodukte berücksichtigt werden, sodaß die Redox-Wirkung exakt auf die Analyse der Ausgangsprodukte eingestellt werden kann. Mit Vorteil wird das erfindungsgemäße Verfahren hierbei so durchgeführt, daß die Metalloxid-, Metallhydroxid-, Metalloxidhydratund/oder Metallsole oder Metallverbindungen oder deren Sole im letzten Drittel des Weges des Zementklinkers in den Ofen eingebracht werden, womit gewährleistet ist, daß nach dem Austritt aus dem Ofen unerwünschte Oxidationsstufen ausgeschlossen werden. Darüber hinaus können die genannten Sole oder Metallverbindungen auch direkt auf den aus dem Ofen austretenden Klinker (meist 80 bis 120°C) aufgesprüht werden und somit eine gleichartige reduzierende Wirkung entfalten.

Mit den erfindungsgemäß eingesetzten Metalloxid-, Metallhydroxid-, Metalloxidhydrat- und/oder Metallsolen oder Metallphosphaten oder -silikaten bzw. deren Solen kann auch die Farbstellung des Zementes nachhaltig beeinflußt werden. Neben den herkömmlichen Farben, welche meist auf Eisenoxid zurückzuführen sind, lassen sich mit einer Reihe von Metallen und Metalloxiden usw. Farbstellungen verwirklichen, welche bisher nur durch aufwendige nachträgliche Verfahrensschritte erzielt werden konnten. Gleichzeitig kann durch die gezielte Auswahl derartiger Metalloxid-, Metallhydroxid-, Metalloxidhydrat- und/oder Metallsole oder Metallphosphate, -silikate oder deren Sole auch die Oberflächenbeschaffenheit der späteren Zementpartikel und damit auch das Abbindeverhalten in bestimmten Grenzen eingestellt werden.

Mit Vorteil werden als Sole Monomere, Heteropolymere oder Polymere von Metalloxid-, Metallhydroxid- und/oder Metalloxid-, oder Metalloxidhydrat-Solen eingesetzt. Mit Vorteil handelt es sich hier um Metalle und/oder deren Oxide, Hydroxide, Oxidhydrate bzw. Phosphate oder Silikate von Metallen der dritten bis achten Nebengruppe des Periodensystems, wobei die Sole gezielt zur Wirkung gelangen können.

Gemäß einer besonders bevorzugten Weiterbildung des erfindungsgemäßen Verfahrens werden nur Metalle mit einem geeigneten Reduktionspotential eingesetzt, wodurch eine wirkungsvolle Reduktion (z.B. von Cr⁶⁺) gewährleistet wird. Die hierfür erforderliche Grundbedingung (um insbesondere die Ausbildung der Chromatstufe hintanzuhalten) wird erfindungsgemäß dann erfüllt, wenn die Metalle und/oder Metallverbindungen ein Redox-Potential aufweisen, welches zur Reduktion von Cr⁶⁺ auf Cr³⁺ ausreicht.

Darüber hinaus lassen sich durch Wahl geeigneter Metalle bzw. Metallverbindungen eine große Anzahl verschiedener Farben des Farbspektrums zur Einfärbung eines so hergestellten Zementes (und damit in einem Folgeschritt beispielsweise farbige Mörtel oder Putze) erzielen.

Die Sole können schließlich beim Mahlen des Zementklinkers eingesetzt werden, wobei ebenfalls eine Reduktion (z.B. Cr⁶⁺ zu Cr³⁺ von unerwünschten Oxidationsstufen möglich wird.

## Patentansprüche

1. Verfahren zum Herstellen von Zement, bei welchem Zement-Rohstoffe in einem Ofen gebrannt oder gesintert werden, wobei in den Ofen reduzierend wirkende Substanzen eingebracht werden, dadurch gekennzeichnet, daß in den Ofen Metalloxid-, Metallhydroxid-, Metalloxidhydrat- und/oder Metallsole, Metallphosphate, Metallsilikate oder deren Sole eingedüst oder eingesprüht werden.

2. Verfahren nach Anspruch 1, dadurch gekennzeichnet, daß die Sole und/oder Metallverbindungen oder deren Sole im letzten Drittel des Weges des Zementes durch den Ofen eingebracht werden.

3. Verfahren nach Anspruch 1, dadurch gekennzeichnet, daß als Sole Monomere, Heteropolymere oder Polymere von Metalloxid-, Metallhydroxid- und/oder Metalloxid-, oder Metalloxidhydrat-Solen eingesetzt werden.

4. Verfahren nach Anspruch 1, 2 oder 3, dadurch gekennzeichnet, daß die Metalle aus der dritten bis achten Nebengruppe des Periodensystems ausgewählt werden.

5. Verfahren nach einem der Ansprüche 1 bis 4, dadurch gekennzeichnet, daß die Metalle und Metallverbindungen ein Redox-Potential aufweisen, welches zur Reduktion von Cr⁶⁺ auf Cr³⁺ ausreicht.

6. Verfahren nach einem der Ansprüche 1 bis 5, dadurch gekennzeichnet, daß die in den Ofen eingedüsten oder eingesprühten Verbindungen bzw. Sole nachfolgend sowohl vor als auch während der Klinkermahlung zugesetzt werden.

## Claims

1. A process for producing cement, in which cement raw materials are burnt or sintered in a furnace while introducing reducingly acting substances into the furnace, characterized in that metal oxide, metal hydroxide, metal oxide hydrate and/or metal sols, metal phosphates, metal silicates or sols thereof are nozzled or sprayed into the furnace.

2. A process according to claim 1, characterized in that the sols and/or the metal compounds or sols thereof are introduced in the last third of the path of the cement through the furnace.

3. A process according to claim 1, characterized in that monomers, heteropolymers or polymers of metal oxide, metal hydroxide and/or metal oxide or metal oxide hydrate sols are used as sols.

4. A process according to claim 1, 2 or 3, characterized in that the metals are selected from the third to eighth side-groups of the Periodic Table.

5. A process according to any one of claims 1 to 4, characterized in that the metals and metal compounds have redox potentials sufficient for the reduction of Cr⁶⁺ to Cr³⁺.

6. A process according to any one of claims 1 to 5, characterized in that the compounds or sols nozzled or sprayed into the furnace subsequently are added both prior to and during clinker grinding.

## Revendications

1. Procédé pour fabriquer du ciment, selon lequel on cuit ou on fritte des matières premières pour le ciment dans un four et selon lequel on introduit dans le four des substances ayant une action réductrice, caractérisé en ce qu'on introduit par projection à l'aide de buses ou par pulvérisation, dans le four, des sols d'oxydes métalliques, des sols d'hydroxydes métalliques, des sols d'oxydes métalliques hydratés et/ou des sols métalliques, des phosphates métalliques, des silicates métalliques ou leurs sols.

2. Procédé selon la revendication 1, caractérisé en ce qu'on introduit les sols et/ou les composés métalliques ou leurs sols dans le dentier tiers du trajet de déplacement du ciment dans le four.

3. Procédé selon la revendication 1, caractérisé en ce qu'on utilise comme sols. des monomères, des hétéropolymères ou des polymères de sols d'oxydes métalliques, de sols d'hydroxydes métalliques et/ou de sols d'oxydes métalliques et/ou de sols d'oxydes métalliques hydratés.

4. Procédé selon la revendication 1,2 ou 3, caractérisé en ce qu'on choisit les métaux parmi les troisième à huitième groupes secondaires du système périodique.

5. Procédé selon l'une des revendications 1 à 4, caractérisé en ce que les métaux et les composés métalliques possèdent un potentiel d'oxydo-réduction, qui suffit pour la réduction de Cr⁶⁺ en Cr³⁺.

6. Procédé selon l'une des revendications 1 à 5, caractérisé en ce que les composés ou les sols, introduits dans le four par projection à l'aide de buses ou par pulvérisation, sont ajoutés successivement aussi bien avant et que pendant le broyage des clinkers.
